# EUROPÄISCHE PATENTANMELDUNG

(11) **EP 4 624 234 A1**
(43) Veröffentlichungstag der Anmeldung: **01.10.2025**
(21) Anmeldenummer: 24165779.0
(22) Anmeldetag: 25.03.2024
(51) Int. Cl.: B60L 53/30, B60L 53/65, B60L 53/66, B60L 53/68

(54) **VERFAHREN ZUR DOKUMENTATION VON VORGÄNGEN AN EINER LADESTATION**

(71) Anmelder: EMH metering GmbH & Co. KG, 19258 Gallin (DE)
(72) Erfinder: MALEK, Norbert, 21438 Thieshope (DE)
(74) Vertreter: Hauck Patent- und Rechtsanwälte PartmbB

(57) **Zusammenfassung**

Verfahren zur Dokumentation von Vorgängen an einer Ladestation für Elektrofahrzeuge, wobei die Ladestation einen Elektrizitätszähler und eine Kommunikationseinrichtung aufweist und das Verfahren die folgenden Schritte umfasst:
• Erfassen einer Interaktion eines Benutzers mit der Ladestation,
• Erfassen einer Kundenidentifikation und/oder einer Transaktionskennung,
• Erfassen von die Ladestationsnutzung betreffenden Daten,
• Zusammenstellen eines Basis-Datenpakets, das die Kundenidentifikation und/oder die Transaktionskennung enthält,
• Zusammenstellen mindestens eines weiteren Datenpakets, das mindestens einen Teil der die Ladestationsnutzung betreffenden Daten enthält, wobei
• nach dem Erfassen der Interaktion eine eindeutige Vorgangsnummer vergeben wird,
• beim Zusammenstellen der Datenpakete die Vorgangsnummer in jedes der Datenpakete aufgenommen wird,
• jedes der Datenpakete mit einer elektronischen Signatur versehen und von der Kommunikationseinrichtung zusammen mit der elektronischen Signatur an eine externe Stelle übermittelt wird.

## Beschreibung

Die Erfindung betrifft ein Verfahren zur Dokumentation von Vorgängen an einer Ladestation für Elektrofahrzeuge. Die Ladestation weist einen Elektrizitätszähler und eine Kommunikationseinrichtung auf. Ladestationen für Elektrofahrzeuge, insbesondere solche, die öffentlich zugänglich sind und somit einer Vielzahl von Benutzern zur Verfügung stehen, werden zum Aufladen unterschiedlichster Elektrofahrzeuge verwendet. Die Benutzer bezahlen die bezogene Energiemenge auf unterschiedlichen Wegen und auf Grundlage verschiedenartigster Tarife, die sich aus den zwischen Benutzern und Versorgungsunternehmen abgeschlossenen Verträgen ergeben. Für eine fehlerfreie und nachvollziehbare Abrechnung ist es notwendig, die an einer Ladestation ablaufenden Vorgänge genau zu dokumentieren.

Das aus der Druckschrift EP 2 755 846 B1 bekannte Verfahren zielt auf eine manipulationssichere, nachprüfbare Abrechnung der bezogenen Energiemenge für Energielieferanten und für nach Möglichkeit anonym bleibende Verbraucher ab. Bei dem bekannten Verfahren wird einem aktuellen Ladevorgang eine Transaktionskennung zugeordnet. Daraufhin wird ein Messgerätezählerstand in der Ladestation erfasst, der die von dem Fahrzeug bezogene Energiemenge repräsentiert. Ein Datenpaket, das diesen Messgerätzählerstand und die Transaktionskennung umfasst, wird mit einer elektronischen Signatur versehen und zu Abrechnungszwecken an eine externe Stelle übermittelt.

Davon ausgehend ist es die Aufgabe der Erfindung, ein Verfahren zur Dokumentation von Vorgängen an einer Ladestation für Elektrofahrzeuge zur Verfügung zu stellen, das flexibel und zuverlässig einsetzbar ist und geringe Anforderungen an die Hardware der Ladestation stellt.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Dokumentation von Vorgängen an einer Ladestation für Elektrofahrzeuge, wobei die Ladestation einen Elektrizitätszähler und eine Kommunikationseinrichtung aufweist. Das Verfahren umfasst die folgenden Schritte:
- Erfassen einer Interaktion eines Benutzers mit der Ladestation,
- Erfassen einer Kundenidentifikation und/oder einer Transaktionskennung,
- Erfassen von die Ladestationsnutzung betreffenden Daten,
- Zusammenstellen eines Basis-Datenpakets, das die Kundenidentifikation und/oder die Transaktionskennung enthält,
- Zusammenstellen mindestens eines weiteren Datenpakets, das mindestens einen Teil der die Ladestationsnutzung betreffenden Daten enthält, wobei
- nach dem Erfassen der Interaktion eine eindeutige Vorgangsnummer vergeben wird,
- beim Zusammenstellen der Datenpakete die Vorgangsnummer in jedes der Datenpakete aufgenommen wird, und
- jedes der Datenpakete mit einer elektronischen Signatur versehen und von der Kommunikationseinrichtung zusammen mit der elektronischen Signatur an eine externe Stelle übermittelt wird.

Die Ladestation stellt die für das Aufladen des Elektrofahrzeugs erforderliche elektrische Energie bereit. Sie weist einen Elektrizitätszähler und eine Kommunikationseinrichtung auf. Zusätzlich oder in eines dieser beiden Elemente integriert gibt es eine elektronische Steuerung, die alle wesentlichen, an der Ladestation ablaufenden Vorgänge steuert, einschließlich des Verfahrens zur Dokumentation dieser Vorgänge.

Im ersten Verfahrensschritt wird eine Interaktion eines Benutzers mit der Ladestation erfasst. Die Interaktion kann insbesondere ein Datenaustausch zwischen Ladestation und einer Kundenkarte oder einem Mobiltelefon des Benutzers, eine Betätigung eines Bedienelements der Ladestation durch den Benutzer oder das Herstellen einer elektrischen Verbindung zwischen Ladestation und Elektrofahrzeug des Benutzers sein. An der Interaktion erkennt die Ladestation die Anwesenheit eines Benutzers bzw. dass dieser Benutzer einen Vorgang an der Ladestation ausführen will.

In einem weiteren Verfahrensschritt wird eine Kundenidentifikation und/oder eine Transaktionskennung erfasst. Beispielsweise kann der Benutzer eine ihm zugeordnete Kundenidentifikation manuell eingegeben oder mithilfe einer Kundenkarte, die die Kundenidentifikation enthält, an die Ladestation übermitteln. Alternativ oder zusätzlich kann eine Transaktionskennung erfasst werden, d. h. eine Einwilligung in eine Finanztransaktion oder ein Nachweis für eine bereits erfolgte Finanztransaktion. Transaktionskennungen sind insbesondere im Zusammenhang mit Guthabenkarten bekannt. Bei Verwendung einer Transaktionskennung kann gegebenenfalls auf eine Identifikation des Kunden verzichtet werden, sodass dieser anonym bleibt.

In einem weiteren Verfahrensschritt werden Daten erfasst, die die Ladestationsnutzung betreffen. Diese Daten können insbesondere eine oder mehrere der folgenden Informationen umfassen: einen Lade-Startzeitpunkt, einen Lade-Endzeitpunkt, einen Tarifwechselzeitpunkt, eine Ladedauer, eine Zählerstand und/oder eine Energiemenge. Die Energiemenge kann eine von der Ladestation an das Elektrofahrzeug abgegebene Energie betreffen, jedoch auch eine vom Elektrofahrzeug über die Ladestation in ein Versorgungsnetz eingespeiste Energie (bidirektionales Laden). Der Zählerstand ist ein von dem Elektrizitätszähler der Ladestation erfasster Zählerstand. Er bezieht sich stets auf einen bestimmten Zeitpunkt, insbesondere kann zum Lade-StartZeitpunkt, zum Lade-Endzeitpunkt oder zu einem oder mehreren Tarifwechselzeitpunkten ein Zählerstand erfasst werden. Welche die Ladestationsnutzung betreffenden Daten im Einzelnen erfasst werden, hängt von den technischen Gegebenheiten ab, zusätzlich möglicherweise auch vom individuellen Abrechnungsmodell, das für den jeweiligen Benutzer vertraglich vereinbart ist.

In einem weiteren Verfahrensschritt wird ein Basis-Datenpaket zusammengestellt, das (mindestens) die Kundenidentifikation und/oder die Transaktionskennung erhält. Im weiteren Verlauf des Verfahrens wird zusätzlich mindestens ein weiteres Datenpaket zusammengestellt, das mindestens einen Teil der die Ladestationsnutzung betreffenden Daten enthält.

Bei der Erfindung wird nach dem Erfassen der Interaktion eine eindeutige Vorgangsnummer vergeben. Diese Vorgangsnummer wird nur für einen einzigen Vorgang verwendet. Die Vorgangsnummer wird beim Zusammenstellen der Datenpakete in jedes der Datenpakete aufgenommen. Darum können alle in den jeweiligen Datenpaketen enthaltenen Informationen eindeutig dem durch die Vorgangsnummer identifizierten Vorgang zugeordnet werden.

Nach dem Zusammenstellen der Datenpakete wird jedes der Datenpakete mit einer elektronischen Signatur versehen. Hierfür kann beispielsweise ein asymmetrisches Verschlüsselungsverfahren eingesetzt werden. Dadurch kann die Authentizität des mit der elektronischen Signatur versehenen Datenpakets jederzeit zuverlässig überprüft werden, sodass eine Manipulation der enthaltenen Daten ausgeschlossen ist.

Jedes der Datenpakete wird mit der Kommunikationseinrichtung der Ladestation an eine externe Stelle übermittelt. Dies geschieht für jedes der Datenpakete einschließlich der zugehörigen, elektronischen Signatur, sodass die zur Verifikation der Authentizität erforderlichen Informationen nach der Übermittlung der externen Stelle vorliegen. Die externe Stelle kann insbesondere eine Datenbank sein, auf die ein Abrechnungsunternehmen zum Erstellen einer Abrechnung für den jeweiligen Vorgang zugreift.

Wie eingangs erläutert, erfordert eine vollständige Dokumentation der Vorgänge an der Ladestation aufgrund der unterschiedlichen Kundenbeziehungen und beteiligten Unternehmen, dass viele und von Fall zu Fall unterschiedliche Daten dokumentiert werden. Die einzelnen Vorgänge können sich dabei über einen längeren Zeitraum erstrecken. Durch das zu Beginn jedes Vorgangs vorgesehene Vergeben einer eindeutigen Vorgangsnummer und die Aufteilung der relevanten Daten auf mehrere Datenpakete, die einzeln elektronisch signiert übermittelt werden, bietet das Verfahren eine allen Anforderungen gerecht werdende Flexibilität.

Das Verfahren ist zudem besonders einfach und stellt geringe Anforderungen an die Hardware der Ladestation, weil mehrere, wahlweise relativ kleine Datenpakete erstellt, signiert und übermittelt werden. Durch die geringe Größe der Datenpakete erfordert die Ausführung des Verfahrens nur eine relativ geringe Speicherkapazität. Auch die für das Erstellen der elektronischen Signatur einzusetzende Rechenleistung ist wesentlich geringer als diejenige, die für eine elektronische Signatur großer Datenpakete, die sämtliche erforderlichen Daten enthalten, benötigt werden würde. Dies ist insbesondere ein relevanter Faktor, weil für gängige Signaturverfahren immer größere Schlüssel eingesetzt werden, um die geforderte Sicherheit zu erreichen, wobei die erforderliche Rechenleistung mit der Länge des verwendeten Schlüssels exponentiell ansteigt.

Schließlich ergeben sich auch für die Kommunikationseinrichtung geringere Anforderungen, weil das Übermitteln kleinerer Datenpakete weniger fehleranfällig ist und bei einer fehlerhaften Datenübertragung gegebenenfalls lediglich das relativ kleine Datenpaket nochmals übermittelt werden muss.

In einer Ausgestaltung wird eine neue, eindeutige Vorgangsnummer vergeben, wenn eine weitere Interaktion eines Benutzers mit der Ladestation erfasst wird, nachdem der durch die Interaktion eingeleitete Vorgang abgeschlossen ist. Der durch die (ursprüngliche) Interaktion eingeleitete Vorgang ist normalerweise, d. h. bei erfolgreichem Ladevorgang, abgeschlossen, wenn der Benutzer das Elektrofahrzeug nach Abschluss des Ladevorgangs von der Ladestation trennt. Darüber hinaus ist ein Vorgang auch dann abgeschlossen, wenn er zum Beispiel wegen eines technischen Fehlers oder auf Wunsch des Benutzers abgebrochen wird. Das Vergeben einen neuen, eindeutigen Vorgangsnummer stellt sicher, dass die Daten aufeinanderfolgender Vorgänge auch dann nicht miteinander vermischt werden, wenn ein erster Vorgang abgebrochen und anschließend neu gestartet wird, auch wenn es sich weiterhin um denselben Benutzer handelt.

In einer Ausgestaltung wird ein Vorgang in der Ladestation anhand der zugehörigen, eindeutigen Vorgangsnummer protokolliert, sobald der Vorgang erfolgreich abgeschlossen ist und/oder falls der Vorgang abgebrochen wird. Anhand des Protokolls können damit alle an der Ladestation abgelaufenen Vorgänge nachvollzogen werden, auch solche, bei denen kein Austausch elektrischer Energie zwischen Elektrofahrzeug und Ladestation stattfindet. Beispielsweise kann ein technischer Fehler oder eine ungültige Kundenidentifikation oder eine ungültige Transaktionskennung zu einem Abbruch führen. Das Protokoll kann in der Ladestation gespeichert werden, sodass beispielsweise ein Servicetechniker die ordnungsgemäße Funktion der Ladestation vor Ort überprüfen kann. Ebenfalls möglich ist, das Protokoll an eine externe Stelle zu übermitteln, wahlweise ebenfalls mit einer elektronischen Signatur. Dies ermöglicht zum Beispiel eine automatisierte Überwachung des Zustands einer Vielzahl von Ladestationen.

In einer Ausgestaltung enthält das Basis-Datenpaket eine eindeutige Bezeichnung der Ladestation und/oder eine eindeutige Bezeichnung des Elektrizitätszählers und/oder einen Lade-Startzeitpunkt und/oder einen Zählerstand zum Lade-Startzeitpunkt. Eine eindeutige Bezeichnung der Ladestation und/oder des Elektrizitätszählers kann wahlweise auch in der Vorgangsnummer enthalten sein, sodass allein anhand der Vorgangsnummer die Ladestation identifiziert werden kann. Lade-Startzeitpunkt und zugehöriger Zählerstand können in der Regel gleich zu Beginn eines Vorgangs erfasst werden. Darum können diese Informationen wahlweise in das Basis-Datenpaket integriert werden.

In einer Ausgestaltung umfasst das Zusammenstellen des mindestens einen weiteren Datenpakets das Zusammenstellen eines ersten weiteren Datenpakets, das einen Lade-Startzeitpunkt und/oder einen zugehörigen Zählerstand enthält. In diesem Fall braucht das Basis-Datenpaket diese Informationen nicht zu enthalten, sondern kann wahlweise auf die Vorgangsnummer und die Kundenidentifikation bzw. Transaktionskennung beschränkt sein. Für die zu Beginn des Ladevorgangs zu erfassenden Informationen kann bereits ein weiteres Datenpaket zusammengestellt werden, um die Größe der einzelnen Datenpakete gering zu halten.

In einer Ausgestaltung umfasst das Zusammenstellen des mindestens einen weiteren Datenpakets das Zusammenstellen eines zweiten weiteren Datenpakets, das einen Lade-Endzeitpunkt und/oder einen zugehörigen Zählerstand und/oder eine bis zum Lade-Endzeitpunkt bezogene Energiemenge enthält. Diese Informationen liegen in der Regel erst bei Abschluss des Ladevorgangs vor, d. h. erst in größerem, zeitlichem Abstand zum Lade-Startzeitpunkt. Es ist daher sinnvoll, diese Daten in einem gesonderten Datenpaket zusammenzustellen.

In einer Ausgestaltung umfasst das Zusammenstellen des mindestens einen weiteren Datenpakets das Zusammenstellen eines dritten weiteren Datenpakets, das einen Tarifwechselzeitpunkt und/oder einen zugehörigen Zählerstand und/oder eine bis zum Tarifwechselzeitpunkt bezogene Energiemenge enthält. Der zugehörige Zählerstand wird von dem in der Ladestation enthaltenen Elektrizitätszähler zum Tarifwechselzeitpunkt erfasst. Es kann sich insbesondere um einen vorgegebenen Tarifwechselzeitpunkt handeln, der von einem Betreiber der Ladestation festgelegt wird. Durch das dritte weitere Datenpaket werden alle erforderlichen Informationen erfasst und an die externe Stelle übermittelt, die die vorgesehene Anwendung eines zum Tarifwechselzeitpunkt wechselnden Tarifs ermöglichen. In einer Ausgestaltung legt die Ladestation den Tarifwechselzeitpunkt in Abhängigkeit von der erfassten Kundenidentifikation und/oder in Abhängigkeit von der erfassten Transaktionskennung fest. Es können daher für unterschiedliche Benutzergruppen unterschiedliche Tarifwechselzeitpunkte angewendet werden.

In einer Ausgestaltung umfasst eines der Datenpakete einen Zeitpunkt der erfassten Interaktion und/oder einen Endzeitpunkt des dadurch ausgelösten Vorgangs. Eine gesonderte Erfassung der genannten Zeitpunkte erlaubt eine Auswertung der Parkdauer des Elektrofahrzeugs. Diese kann erheblich von der Dauer des Energiebezugs abweichen. Wahlweise können bei der Abrechnung des betreffenden Vorgangs Blockiergebühren berechnet werden.

In einer Ausgestaltung wird beim Versehen der Datenpakete mit einer elektronischen Signatur zwischen aufeinanderfolgenden Datenpaketen ein vorgegebener zeitlicher Abstand eingehalten. Diese Maßnahme führt dazu, dass die Ladestation nicht ununterbrochen mit aufeinanderfolgenden Signaturvorgängen belastet wird. Sie bleibt daher stets in der Lage, innerhalb einer angemessenen Zeitspanne zum Beispiel auf eine Benutzerinteraktion zu reagieren.

In einer Ausgestaltung wird das Zusammenstellen der Datenpakete so gesteuert, dass keines der Datenpakete eine vorgegebene Maximalgröße überschreitet. Weder das Basis-Datenpaket, noch jedes der weiteren Datenpakete überschreitet demnach die vorgegebene maximale Größe, die so gewählt ist, dass die zur Verfügung stehende Rechenleistung und Speicherkapazität der Ladestation durch die verschiedenen Verfahrensschritte nicht überlastet wird. Anders als bei einer starren Definition des Inhalts jedes einzelnen Datenpakets kann das Verfahren flexibel an die Gegebenheiten angepasst werden. Falls gewünscht, können die die Ladestationsnutzung betreffenden Daten in der Ladestation bis zum Abschluss eines Vorgangs gesammelt und anschließend, wenn die zu übermittelnde Datenmenge feststeht, auf Fragmente geeigneter Größe aufgeteilt werden.

In einer Ausgestaltung wird jedes Datenpaket unmittelbar nachdem es mit der elektronischen Signatur versehen wurde, von der Kommunikationseinrichtung an die externe Stelle übermittelt. Bei dieser Verfahrensführung ergeben sich besonders geringe Anforderungen an den in der Ladestation vorzuhaltenden Speicherplatz.

In einer Ausgestaltung wird die Vorgangsnummer dem Benutzer an der Ladestation angezeigt und/oder von der Kommunikationseinrichtung an den Benutzer übermittelt. Durch diese Maßnahme kann der Benutzer den individuellen Vorgang auf Wunsch zurückverfolgen. Ein Bekanntmachen der Vorgangsnummer ist bei der Erfindung allerdings nicht notwendig. Es kann sich ebenso gut um eine nur intern (d. h. innerhalb der Ladestation und in der externen Stelle) verwendete Bezeichnung handeln.

In einer Ausgestaltung wird auf Grundlage der an die externe Stelle übermittelten Datenpakete eine Rechnung für den Vorgang erstellt, wobei optional in der Rechnung die Vorgangsnummer angegeben ist. Wie erwähnt, können anhand der in jedem Datenpaket enthaltenen Vorgangsnummer die für eine Rechnung benötigten Daten einfach identifiziert werden, auch wenn bei der externen Stelle innerhalb kürzester Zeit viele Tausend Datenpakete von einer Vielzahl von Ladestationen eintreffen. Das Ausweisen der Vorgangsnummer auf der Rechnung ermöglicht dem Benutzer eine weitere Kontrolle, insbesondere wenn er sich die Vorgangsnummer an der Ladestation notiert hatte.

Die oben angegebene Aufgabe wird ebenfalls gelöst durch die Ladestation mit den Merkmalen des Anspruchs 15. Die Ladestation ist für Elektrofahrzeuge bestimmt und weist einen Elektrizitätszähler und eine Kommunikationseinrichtung auf. Die Ladestation ist dazu eingerichtet, ein Verfahren nach einem der Ansprüche 1 bis 13 auszuführen. Das bedeutet, dass eine elektronische Steuerung der Ladestation, die wahlweise in die Kommunikationseinrichtung oder den Elektrizitätszähler integriert sein kann, dazu eingerichtet ist, die vorstehend erläuterten Verfahrensschritte auszuführen. Hierfür kann die Ladestation insbesondere eine entsprechende Software aufweisen. Alle vorstehenden Erläuterungen des Verfahrens gelten für die Ladestation entsprechen.

Nachfolgend wird die Erfindung anhand eines in einer Figur dargestellten Ausführungsbeispiels näher erläutert.

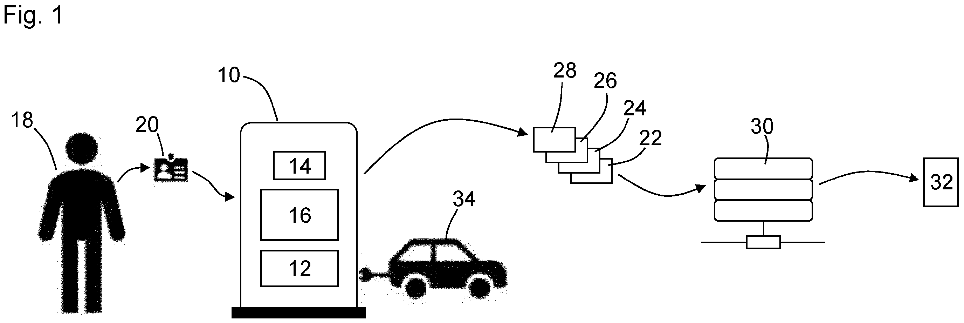

- Fig. 1: enthält eine schematische Darstellung, die einen typischen Vorgang an einer Ladestation illustriert.

Figur 1 zeigt etwa in der Mitte eine Ladestation 10, die einen Elektrizitätszähler 12, eine Kommunikationseinrichtung 14 sowie eine elektronische Steuerung 16 aufweist.

Rechts von der Ladestation 10 ist ein Elektrofahrzeug 34 dargestellt, das über ein Ladekabel mit der Ladestation 10 verbunden ist.

Links der Ladestation 10 befindet sich ein Benutzer 18, der über eine Kundenkarte 20 verfügt. Weiter rechts befindet sich eine externe Stelle 30, die als Computersystem veranschaulicht ist. Die externe Stelle 30 ist einem Abrechnungsunternehmen zugeordnet.

Das Verfahren zur Dokumentation wird anhand eines typischen, erfolgreichen Ladevorgangs erläutert. Es beginnt damit, dass sich der Benutzer 18 mit seiner Kundenkarte 20 an der Ladestation 10 anmeldet. Durch diese Interaktion des Benutzers wird die Ladestation 10 dazu veranlasst, eine eindeutige Vorgangsnummer zu vergeben. Diese wird bis zum Abschluss des durch die Interaktion eingeleiteten Vorgangs verwendet.

Auf der Kundenkarte 20 ist eine Kundenidentifikation gespeichert, die von der Ladestation 10 erfasst wird, insbesondere über einen drahtlosen Kommunikationsvorgang mit einem in der Kundenkarte 20 enthaltenen RFID-Chip.

Sobald die Kundenidentifikation 20 erfasst wurde, erstellt die elektronische Steuerung 16 ein Basis-Datenpaket 22, das die Kundenidentifikation und die eindeutige Vorgangsnummer enthält, und versieht es mit einer elektronischen Signatur. Das so gebildete, signierte Basis-Datenpaket 22 wird im Anschluss von der Kommunikationseinrichtung 14 an die externe Stelle 30 übermittelt.

Später wird in der Ladestation 10 ein erstes weiteres Datenpaket 24 erstellt, das einen Lade-Startzeitpunkt und einen zugehörigen Zählerstand enthält. Auch dieses Datenpaket 24 wird mit einer elektronischen Signatur versehen und an die externe Stelle 30 übermittelt.

Im Beispiel wurde der Ladevorgang um 19:40 Uhr gestartet. Vorgesehen ist ein Tarifwechsel um 20:00 Uhr. Zu diesem Tarifwechselzeitpunkt wird ebenfalls ein Zählerstand von dem Elektrizitätszähler 12 erfasst und mit dem Tarifwechselzeitpunkt zu einem zweiten weiteren Datenpaket 26 zusammengestellt. Auch dieses Datenpaket 26 wird mit einer elektronischen Signatur versehen und an die externe Stelle 30 übermittelt.

Zu einem Lade-Endzeitpunkt um 20:40 Uhr ist der Ladevorgang abgeschlossen. Der Lade-Endzeitpunkt und der zu diesem Zeitpunkt erfasste Zählerstand werden zu einem dritten weiteren Datenpaket 28 zusammengestellt, ebenfalls mit einer elektronischen Signatur versehen und die externe Stelle 30 übermittelt.

Zu einem späteren Zeitpunkt werden die Datenpakete 22, 24, 26, 28 von einem Abrechnungsunternehmen ausgewertet, wobei die zusammengehörenden Daten anhand der jeweils enthaltenen, eindeutigen Vorgangsnummer einfach zusammengeführt werden können. Das Abrechnungsunternehmen erstellt sodann eine Rechnung 32, die die abrechnungsrelevanten Informationen sowie die eindeutige Vorgangsnummer enthält.

### Liste der Bezugszeichen

- 10: Ladestation
- 12: Elektrizitätszähler
- 14: Kommunikationseinrichtung
- 16: elektronische Steuerung
- 18: Benutzer
- 20: Kundenkarte
- 22: Basis-Datenpaket
- 24: erstes weiteres Datenpaket
- 26: zweites weiteres Datenpaket
- 28: drittes weiteres Datenpaket
- 30: externe Stelle
- 32: Rechnung
- 34: Elektrofahrzeug

## Patentansprüche

1. Verfahren zur Dokumentation von Vorgängen an einer Ladestation (10) für Elektrofahrzeuge (34), wobei die Ladestation (10) einen Elektrizitätszähler (12) und eine Kommunikationseinrichtung (14) aufweist und das Verfahren die folgenden Schritte umfasst:
• Erfassen einer Interaktion eines Benutzers (18) mit der Ladestation (10),
• Erfassen einer Kundenidentifikation und/oder einer Transaktionskennung,
• Erfassen von die Ladestationsnutzung betreffenden Daten,
• Zusammenstellen eines Basis-Datenpakets (22), das die Kundenidentifikation und/oder die Transaktionskennung enthält,
• Zusammenstellen mindestens eines weiteren Datenpakets (24), das mindestens einen Teil der die Ladestationsnutzung betreffenden Daten enthält, **dadurch gekennzeichnet, dass**
• nach dem Erfassen der Interaktion eine eindeutige Vorgangsnummer vergeben wird,
• beim Zusammenstellen der Datenpakete (22, 24, 26, 28) die Vorgangsnummer in jedes der Datenpakete (22, 24, 26, 28) aufgenommen wird,
• jedes der Datenpakete (22, 24, 26, 28) mit einer elektronischen Signatur versehen und von der Kommunikationseinrichtung (14) zusammen mit der elektronischen Signatur an eine externe Stelle (30) übermittelt wird.

2. Verfahren nach Anspruch 1, **dadurch gekennzeichnet, dass** eine neue, eindeutige Vorgangsnummer vergeben wird, wenn eine weitere Interaktion eines Benutzers (18) mit der Ladestation (10) erfasst wird, nachdem der durch die Interaktion eingeleitete Vorgang abgeschlossen ist.

3. Verfahren nach Anspruch 1 oder 2, **dadurch gekennzeichnet, dass** ein Vorgang in der Ladestation (10) anhand der zugehörigen, eindeutigen Vorgangsnummer protokolliert wird, sobald der Vorgang abgeschlossen ist und/oder falls der Vorgang abgebrochen wird.

4. Verfahren nach einem der Ansprüche 1 bis 3, **dadurch gekennzeichnet, dass** das Basis-Datenpaket (22) eine eindeutige Bezeichnung der Ladestation (10) und/oder eine eindeutige Bezeichnung des Elektrizitätszählers (12) und/oder einen Lade-Startzeitpunkt und/oder einen Zählerstand zum Lade-Startzeitpunkt enthält.

5. Verfahren nach einem der Ansprüche 1 bis 4, **dadurch gekennzeichnet, dass** das Zusammenstellen des mindestens einen weiteren Datenpakets (24, 26, 28) das Zusammenstellen eines ersten weiteren Datenpakets (24) umfasst, das einen Lade-Startzeitpunkt und/oder einen zugehörigen Zählerstand enthält.

6. Verfahren nach einem der Ansprüche 1 bis 5, **dadurch gekennzeichnet, dass** das Zusammenstellen des mindestens einen weiteren Datenpakets (24, 26, 28) das Zusammenstellen eines zweiten weiteren Datenpakets (26) umfasst, das einen Lade-Endzeitpunkt und/oder einen zugehörigen Zählerstand und/oder eine bis zum Lade-Endzeitpunkt bezogene Energiemenge enthält.

7. Verfahren nach einem der Ansprüche 1 bis 6, **dadurch gekennzeichnet, dass** das Zusammenstellen des mindestens einen weiteren Datenpakets (24, 26, 28) das Zusammenstellen eines dritten weiteren Datenpakets (28) umfasst, das einen Tarifwechselzeitpunkt und/oder einen zugehörigen Zählerstand und/oder eine bis zum Tarifwechselzeitpunkt bezogene Energiemenge enthält.

8. Verfahren nach einem der Anspruch 7, **dadurch gekennzeichnet, dass** die Ladestation (10) den Tarifwechselzeitpunkt in Abhängigkeit von der erfassten Kundenidentifikation und/oder in Abhängigkeit von der erfassten Transaktionskennung festlegt.

9. Verfahren nach einem der Ansprüche 1 bis 6, **dadurch gekennzeichnet, dass** eines der Datenpakete (22, 24, 26, 28) einen Zeitpunkt der erfassten Interaktion und/oder einen Endzeitpunkt des dadurch ausgelösten Vorgangs umfasst.

10. Verfahren nach einem der Ansprüche 1 bis 9, **dadurch gekennzeichnet, dass** beim Versehen der Datenpakete (22, 24, 26, 28) mit einer elektronischen Signatur zwischen aufeinanderfolgenden Datenpaketen (22, 24, 26, 28) ein vorgegebener zeitlicher Abstand eingehalten wird.

11. Verfahren nach einem der Ansprüche 1 bis 10, **dadurch gekennzeichnet, dass** das Zusammenstellen der Datenpakete (22, 24, 26, 28) so gesteuert wird, dass keines der Datenpakete (22, 24, 26, 28) eine vorgegebene maximale Größe überschreitet.

12. Verfahren nach einem der Ansprüche 1 bis 11, **dadurch gekennzeichnet, dass** jedes Datenpaket (22, 24, 26, 28) unmittelbar nachdem es mit der elektronischen Signatur versehen wurde von der Kommunikationseinrichtung (14) an die externe Stelle (30) übermittelt wird.

13. Verfahren nach einem der Ansprüche 1 bis 12, **dadurch gekennzeichnet, dass** die Vorgangsnummer dem Benutzer an der Ladestation (10) angezeigt und/oder von der Kommunikationseinrichtung (14) an den Benutzer übermittelt wird.

14. Verfahren nach einem der Ansprüche 1 bis 13, **dadurch gekennzeichnet, dass** auf Grundlage der an die externe Stelle (30) übermittelten Datenpakete (22, 24, 26, 28) eine Rechnung für den Vorgang erstellt wird, wobei optional in der Rechnung die Vorgangsnummer angegeben ist.

15. Ladestation (10) für Elektrofahrzeuge (34), die einen Elektrizitätszähler (12) und eine Kommunikationseinrichtung (14) aufweist und dazu eingerichtet ist, ein Verfahren nach einem der Ansprüche 1 bis 13 auszuführen.
